# EUROPEAN PATENT APPLICATION

(11) **EP 4 386 889 A1**
(43) Date of publication of application: **19.06.2024**
(21) Application number: 22929319.6
(22) Date of filing: 03.03.2022
(51) Int. Cl.: H01M 4/133

(54) **NEGATIVE ELECTRODE ACTIVE SUBSTANCE AND PREPARATION METHOD THEREFOR, AND SECONDARY BATTERY AND ELECTRICAL DEVICE INCLUDING SAME**

(71) Applicant: Contemporary Amperex Technology Co., Limited, Ningde, Fujian 352100 (CN)
(72) Inventor: ZENG, Chen, Ningde, Fujian 352100 (CN); KANG, Meng, Ningde, Fujian 352100 (CN); DENG, Baida, Ningde, Fujian 352100 (CN); HE, Libing, Ningde, Fujian 352100 (CN)
(74) Representative: Gong, Jinping
(86) International application number: PCT/CN2022/079012
(87) International publication number: WO 2023/164869

(57) **Abstract**

This application provides a negative active material, a method for preparing same, a secondary battery containing same, and an electrical device. The negative active material includes a natural graphite substrate of a porous structure and a functional material distributed in pores of the natural graphite substrate, and the functional material includes amorphous carbon and a titanium-containing compound. The negative active material provided in this application exhibits excellent kinetic performance, and the secondary battery provided herein exhibits excellent fast-charging performance and cycle performance.

## Description

### TECHNICAL FIELD

This application relates to the technical field of batteries, and in particular, to a negative active material, a method for preparing same, a secondary battery containing same, and an electrical device.

### BACKGROUND

A negative active material is an important part of a secondary battery and exerts an significant effect on the performance of the battery. Currently, graphite is prevalently used as a negative active material, and is classed into artificial graphite and natural graphite depending on the crystallization manner. The natural graphite is widely applied to secondary batteries by virtue of no need of high-temperature graphitization, cost-effectiveness, and a high capacity. However, the natural graphite incurs a relatively high expansion rate and poor structural stability during cycling, thereby deteriorating the cycle performance of the battery. In addition, with a relatively high degree of graphitization, the natural graphite is prone to deform under a condition of a high compacted density. The rate at which active ions enter an inner layer of the natural graphite is limited, thereby resulting in relatively low fast-charging performance of the battery.

### SUMMARY

This application is developed in view of the above problems. An objective of this application is to provide a negative active material of high kinetic performance and a method for preparing same. The negative active material can maintain a good pore structure under a condition of a high compacted density, and can provide active ion transport channels and increase active ion deintercalation sites. Further, this application provides a secondary battery containing the negative active material and exhibiting high cycle performance and high fast-charging performance, and an electrical device containing the secondary battery.

To achieve the above objectives, a first aspect of this application provides a negative active material. The negative active material includes a natural graphite substrate of a porous structure and a functional material distributed in pores of the natural graphite substrate. The functional material includes amorphous carbon and a titanium-containing compound.

In some embodiments, the titanium-containing compound may include one or more of a titanium-containing oxide or a titanate salt. Optionally, a chemical formula of the titanium-containing oxide may be expressed as TiOₓ, where 0 < x ≤ 2. For example, the titanium-containing oxide may include one or more of titanium monoxide, titanium dioxide, or dititanium trioxide, and optionally, the titanate salt includes one or more of lithium titanate or lithium metatitanate.

In some embodiments, a morphology of the titanium-containing compound may be one or more of a sphere, a spheroid, a polyhedron, or a nanorod. In some embodiments, a mass percent of the functional material in the negative active material may be less than or equal to 10%, optionally 1% to 10%, and further optionally, 2% to 5%.

In some embodiments, a mass ratio between the amorphous carbon and the titanium-containing compound is (1 to 9): 1, and optionally (2 to 6): 1.

In some embodiments, the porous structure of the natural graphite substrate may include mesopores. A volume percent of the mesopores is greater than or equal to 60%, and optionally, the volume percent of the mesopores is greater than or equal to 70%.

In some embodiments, the porous structure of the natural graphite substrate may include micropores. Optionally, a volume percent of the micropores is less than or equal to 20%.

In some embodiments, the porous structure of the natural graphite substrate may include macropores. Optionally, a volume percent of the macropores is less than or equal to 20%.

In some embodiments, a porosity of the negative active material is greater than or equal to 70%. Optionally, the porosity of the negative active material is 70% to 90%.

In some embodiments, the negative active material may further include at least one of element N or element S. Optionally, a content of the element N and/or the element S is less than or equal to 5%.

In some embodiments, Dv₅₀ of the negative active material may be 5 µm to 30 µm, and optionally 17 µm to 25 µm.

In some embodiments, a span (Dv₉₀ - Dv₁₀)/Dv₅₀ of the negative active material may be 0.5 to 2.0, and optionally 0.8 to 1.53.

In some embodiments, a specific surface area of the negative active material may be 2.0 m²/g to 20 m²/g, and optionally 3 m²/g to 10 m²/g.

In some embodiments, a tapped density of the negative active material may be 0.6 g/cm³ to 1.3 g/cm³, and optionally 0.8 g/cm³ to 0.9 g/cm³.

In some embodiments, a gram capacity of the negative active material is greater than or equal to 360 mAh/g. Optionally, the gram capacity of the negative active material is greater than or equal to 362 mAh/g.

A second aspect of this application provides a method for preparing the negative active material. The method includes the following steps:
S1: performing, by using a pore-forming agent, pore-forming treatment on natural graphite raw pellets to obtain a porous natural graphite precursor;
S2: mixing a carbon precursor with a titanium-containing precursor to obtain a functional material precursor; and
S3: mixing the porous natural graphite precursor obtained in step S1 with the functional material precursor obtained in step S2 to obtain a mixture, and heat-treating the mixture under an inert atmosphere to obtain the negative active material.

The negative active material includes a natural graphite substrate of a porous structure and a functional material distributed in pores of the natural graphite substrate, and the functional material includes amorphous carbon and a titanium-containing compound.

In some embodiments, the pore-forming agent in step S1 may be selected from salt pore-forming agents. Optionally, the salt pore-forming agents may be one or more selected from LiNO₃, (NH₄)₂S₂O₃, or anhydrous CaCl₂.

In some embodiments, a mass ratio between the natural graphite raw pellets and the pore-forming agent in step S1 may be 1: (1 to 50), and optionally 1: (5 to 20).

In some embodiments, a temperature of the pore-forming treatment in step S1 may be less than or equal to 1100 °C, optionally less than or equal to 500 °C, and further optionally, 200 °C to 300 °C; and/or, a heating rate of the pore-forming treatment may be 2 °C/min to 5 °C/min; and/or a temperature holding time of the pore-forming treatment may be 0.5 to 48 hours.

In some embodiments, a mass ratio between the carbon precursor and the titanium-containing precursor in step S2 may be (1 to 160): (1 to 8), and optionally (1 to 120): (1 to 4). Optionally, the carbon precursor may be one or more selected from tar, pitch, modified pitch, resin, or natural cellulose. Optionally, the titanium-containing precursor may be one or more selected from liquid-state alkyl titanate (containing lithium acetate or not), titanic acid, metatitanic acid, or water-soluble titanium oxide gel. Preferably, the liquid-state alkyl titanate is one or more selected from n-butyl titanate or tetraethyl titanate.

In some embodiments, a mass ratio between the porous natural graphite precursor and the functional material precursor in step S3 may be (3 to 9): (1 to 7), and optionally (4 to 7): (1 to 7).

In some embodiments, a temperature of the heat treatment in step S3 may be 500 °C to 1500 °C, and optionally 800 °C to 1200 °C; and/or a heating rate of the heat treatment may be 2 °C/min to 10 °C/min; and/or a temperature holding time of the heat treatment may be 0.5 to 48 hours.

A third aspect of this application provides a secondary battery. The secondary battery includes the negative active material according to the first aspect of this application or a negative active material prepared by the method according to the second aspect of this application.

A fourth aspect of this application provides an electrical device. The electrical device includes the secondary battery according to the third aspect of this application.

This application brings at least the following beneficial effects:

The negative active material of the secondary battery according to this application includes a natural graphite substrate of a porous structure and a functional material distributed in the pores of the natural graphite substrate, and the functional material includes amorphous carbon and a titanium-containing compound. The negative active material exhibits good kinetic performance under a condition of a high compacted density. The natural graphite substrate of a porous structure can provide active ion transport channels and effectively increase the rate at which the active ions enter an inner layer of the natural graphite. In addition, under the condition of a high compacted density, the functional material distributed in the pores of the natural graphite substrate can maintain the stability of the pore structure of the natural graphite substrate and provide active ion deintercalation sites. Therefore, the secondary battery prepared by using the negative active material can significantly improve the cycle performance and fast-charging performance of the secondary battery, and in turn, increase the service life. The electrical device according to this application contains the secondary battery according to this application, and therefore, achieves at least the same advantages as the secondary battery.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a negative active material according to a specific embodiment of this application;
FIG. 2 is a schematic diagram of a secondary battery according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of FIG. 4; and
FIG. 6 is a schematic diagram of an electrical device according to an embodiment of this application.

### List of reference numerals:

1. Battery pack;
2. Upper box;
3. Lower box;
4. Battery module;
5. Secondary battery;
6. Natural graphite substrate;
7. Porous structure; and
8. Functional material

### DETAILED DESCRIPTION OF EMBODIMENTS

The following describes in detail a negative active material, a method for preparing same, a secondary battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just abrief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B" : A is true (or existent) and B is false (or absent); A is false (or absent) and B is true (or existent); and, both A and B are true (or existent).

It is hereby noted that in the description herein, unless otherwise specified, a range defined by a numerical value qualified by "at least" or "at most" includes this numerical value, and the word "more" in the phrase "one or more of" means at least two.

### [Secondary battery]

Secondary batteries have become a desirable power supply of an electrical device by virtue of a high energy density, portability, no memory effect, environmental friendliness, and other merits. As an important part of the secondary battery, a negative active material exerts an important effect on the performance of the battery. Currently, graphite is prevalent as a negative active material, and is classed into artificial graphite and natural graphite depending on the crystallization manner. By virtue of no need of high-temperature graphitization, cost-effectiveness, and a high capacity, the natural graphite is widely applied to secondary batteries and has also been gradually applied to the power battery field. However, the natural graphite incurs a relatively high expansion rate and poor structural stability during cycling, thereby deteriorating the cycle performance of the battery. In addition, with a relatively high degree of graphitization, the natural graphite is prone to deform under a condition of a high compacted density. The rate at which active ions enter an inner layer of the natural graphite is limited, thereby resulting in relatively low fast-charging performance of the battery. Therefore, how to reduce the cycle expansion rate of a secondary battery that uses natural graphite as a negative active material, and how to improve the fast-charging performance of the secondary battery, have become a focus in the technical field of secondary batteries.

This application provides a secondary battery. The secondary battery exhibits good safety performance and fast-charging performance.

Generally, a secondary battery includes a negative electrode plate, a positive electrode plate, an electrolyte, and a separator. During charging of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Negative electrode plate]

The negative electrode plate includes a negative current collector and a negative film disposed on at least one surface of the negative current collector. As an example, the negative current collector includes two surfaces opposite to each other in a thickness direction of the negative current collector. The negative film layer is disposed on either or both of the two opposite surfaces of the negative current collector.

The negative current collector may be made of a material of high electrical conductivity and high mechanical strength, and serve functions of conducting electrons and collecting current. In some embodiments, the negative current collector may be a copper foil.

The negative film includes a negative active material. The steps of preparing a negative electrode plate from the negative active material may include: dispersing a negative active material, a binder, and optionally a thickener and a conductive agent into a solvent such as deionized water to form a homogeneous negative slurry, coating a negative current collector with the negative slurry, and performing steps such as drying and cold calendering to obtain a negative electrode plate.

### Negative active material

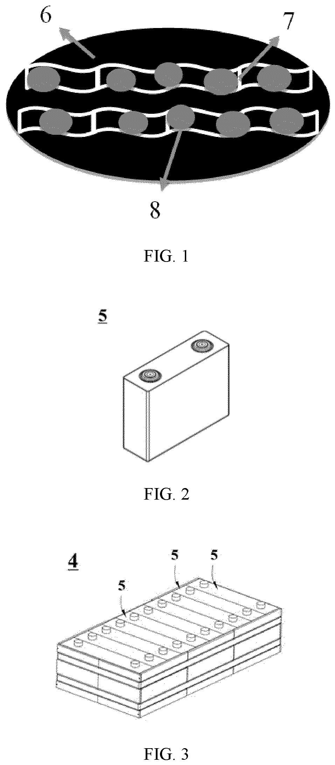

This application provides a negative active material for preparing a negative electrode plate. The negative active material exhibits good kinetic performance under a condition of a high compacted density. As shown in FIG. 1, the negative active material includes a natural graphite substrate 6 of a porous structure 7 and a functional material 8 primarily distributed in pores of the natural graphite substrate. The functional material 8 includes amorphous carbon and a titanium-containing compound. In the negative active material, the porous structure 7 of the natural graphite substrate 6 can provide a transport channel for active ions (such as lithium ions), thereby significantly improving the rate at which the active ions enter the inner layer of the natural graphite, and significantly improving the fast-charging performance of the secondary battery containing the negative active material. The functional material 8 containing amorphous carbon and a titanium-containing compound can maintain the stability of the pore structure of the natural graphite substrate 6 on the one hand, and can provide active ion deintercalation sites on the other hand, thereby reducing the cycle expansion rate of the negative active material, and in turn, enhancing the cycle performance of the secondary battery that contains the negative active material, and increasing the service life.

In some embodiments, the titanium-containing compound may include one or more of a titanium-containing oxide or a titanate salt. Optionally, a chemical formula of the titanium-containing oxide may be expressed as TiOₓ, where 0 < x ≤ 2. For example, the titanium-containing oxide may include one or more of titanium monoxide, titanium dioxide, or dititanium trioxide, and optionally, the titanate salt includes one or more of lithium titanate or lithium metatitanate.

In some embodiments, a morphology of the titanium-containing compound may be one or more of a sphere, a spheroid, a polyhedron, or a nanorod. Such morphologies of the titanium-containing compound can further facilitate uniform release of internal stress of the negative active material powder under a condition of a high compacted density and maintain the uniformity of the pore structure. In addition, such morphologies of the titanium-containing compound can further facilitate the uniform dispersion of the negative active material powder during the preparation of a slurry. After the negative electrode plate is prepared, the active material is distributed uniformly to avoid insufficient kinetics in local regions.

In some embodiments, the amorphous carbon assumes no particular morphology, and may be attached to an inner wall of a pore in the porous structure of the natural graphite substrate or to a surface of the titanium-containing compound.

In some embodiments, a mass percent of the functional material in the negative active material may be less than or equal to 10%, optionally 1% to 10%, and further optionally, 2% to 5%.

In some embodiments, a mass ratio between the amorphous carbon and the titanium-containing compound is (1 to 9): 1, and optionally (2 to 6): 1.

In some embodiments, the porous structure of the natural graphite substrate may include mesopores (with a pore diameter of 2 to 50 nm). A volume percent of the mesopores is greater than or equal to 60%, and optionally, the volume percent of the mesopores is greater than or equal to 70%. When mesopores represent a major proportion of the porous structure, the porous structure of the natural graphite substrate is more stable, thereby avoiding increase of side reactions caused by excessive micropores, and avoiding a decline in the compaction performance of the negative active material caused by excessive macropores.

In some embodiments, the porous structure of the natural graphite substrate may further include micropores (with a pore diameter less than 2 nm). Optionally, a volume percent of the micropores is less than or equal to 20%, and optionally, less than or equal to 10%. The small amount of micropores included in the natural graphite substrate can be further used to provide sites for storing active ions and increase the capacity. In addition, the small amount of micropores can further reduce side reactions.

In some embodiments, the porous structure of the natural graphite substrate may further include macropores (with a pore diameter greater than 50 nm). Optionally, a volume percent of the macropores is less than or equal to 20%, and optionally, less than or equal to 10%. The small amount of macropores included in the natural graphite substrate can be further used to provide active ion transport channels, increase the effect of infiltration of the electrolytic solution, and enhance the fast-charging performance. In addition, the small amount of macropores further avoid a decline in the compaction performance of the negative active material.

In some embodiments, a porosity of the negative active material is greater than or equal to 70%. Optionally, the porosity of the negative active material is 70% to 90%.

In some embodiments, the negative active material may further include at least one of element N or element S. Optionally, a content of the element N and/or the element S is less than or equal to 5%. The added heteroatoms such as N atoms and/or S atoms are electronegative, thereby further improving the effect of the electrolytic solution in infiltrating the negative active material, and enhancing the fast-charging performance of the secondary battery containing the negative active material. The heteroatoms such as N element and/or S element may be added in the negative active material by using a pore-forming agent that contains the element N and/or the element S.

In some embodiments, Dv₅₀ of the negative active material may be 5 µm to 30 µm, and optionally 17 µm to 25 µm.

In some embodiments, a span (Dv₉₀ - Dv₁₀)/Dv₅₀ of the negative active material may be 0.5 to 2.0, and optionally 0.8 to 1.53.

In some embodiments, a specific surface area of the negative active material may be 2.0 m²/g to 20 m²/g, and optionally 3 m²/g to 10 m²/g.

In some embodiments, a tapped density of the negative active material may be 0.6 g/cm³ to 1.3 g/cm³, and optionally 0.8 g/cm³ to 0.9 g/cm³.

In some embodiments, a gram capacity of the negative active material is greater than or equal to 360 mAh/g. Optionally, the gram capacity of the negative active material is greater than or equal to 362 mAh/g.

### Method for preparing a negative active material

This application further provides a method for preparing a negative active material. The method includes the following steps:
S1: performing, by using a pore-forming agent, pore-forming treatment on natural graphite raw pellets to obtain a porous natural graphite precursor;
S2: mixing a carbon precursor with a titanium-containing precursor to obtain a functional material precursor; and
S3: mixing the porous natural graphite precursor obtained in step S 1 with the functional material precursor obtained in step S2 to obtain a mixture, and heat-treating the mixture under an inert atmosphere to obtain the negative active material.

The negative active material includes a natural graphite substrate of a porous structure and a functional material distributed in pores of the natural graphite substrate, and the functional material includes amorphous carbon and a titanium-containing compound.

In some embodiments, the pore-forming agent in step S1 may be selected from salt pore-forming agents. Optionally, the salt pore-forming agents may be one or more selected from LiNO₃, (NH₄)₂S₂O₃, or anhydrous CaCl₂.

In some embodiments, a mass ratio between the natural graphite raw pellets and the pore-forming agent in step S1 may be 1: (1 to 50), and optionally 1: (5 to 20). If the mass ratio between the pore-forming agent and the natural graphite raw pellets exceeds 50: 1, the percentage of macropores in the prepared porous natural graphite precursor may be increased, thereby deteriorating the energy density and the compaction performance of the negative active material. If the mass ratio between the pore-forming agent and the natural graphite raw pellets exceeds is less than 1: 1, the porosity of the porous natural graphite precursor may be decreased, thereby deteriorating the kinetic performance.

In some embodiments, a temperature of the pore-forming treatment in step S1 may be less than or equal to 1100 °C, optionally less than or equal to 500 °C, and further optionally, 200 °C to 300 °C; and/or, a heating rate of the pore-forming treatment may be 2 °C/min to 5 °C/min; and/or a temperature holding time of the pore-forming treatment may be 0.5 to 48 hours. If the temperature of the pore-forming treatment exceeds 1100 °C and/or the temperature holding time exceeds 48 hours, the energy consumption may be increased without obviously improving the performance of the negative active material. If the heating rate exceeds 5 °C/min, the energy density and kinetic performance of the porous natural graphite precursor may be deteriorated, thereby deteriorating the energy density and kinetic performance of the negative active material.

In some embodiments, the mass ratio between the carbon precursor and the titanium-containing precursor in step S2 may be (1 to 160): (1 to 8), and optionally (1 to 120): (1 to 4). Optionally, the carbon precursor may be one or more selected from tar, pitch, modified pitch, resin, or natural cellulose. The carbon precursor is used to generate the amorphous carbon of the functional material in the negative active material in step S3. Optionally, the titanium-containing precursor may be one or more selected from liquid-state alkyl titanate (containing lithium acetate or not), titanic acid, metatitanic acid, or water-soluble titanium oxide gel. Preferably, the liquid-state alkyl titanate may be one or more selected from n-butyl titanate or tetraethyl titanate. The titanium-containing precursor is used to generate the titanium-containing compound of the functional material in the negative active material in step S3, such as a titanium-containing oxide (for example, titanium monoxide, titanium dioxide, dititanium trioxide, or a combination thereof), a titanate salt (such as lithium titanate), or a combination thereof. The liquid-state carbon precursor (either being inherently liquid or becoming liquid by dissolving in a solvent) and the titanium-containing precursor can conveniently fill the pores of the porous natural graphite precursor, thereby improving the infiltration effect of the electrolytic solution, and in turn, enhancing the kinetic performance of the negative active material.

In some embodiments, a mass ratio between the porous natural graphite precursor and the functional material precursor in step S3 may be (3 to 9): (1 to 7), and optionally (4 to 7): (1 to 7). If the mass ratio between the porous natural graphite precursor and the functional material precursor is less than 3: 7, the energy density of the negative active material may be deteriorated. If the mass ratio between the porous natural graphite precursor and the functional material precursor is greater than 9: 1, the percentage of the functional material in the negative active material may be overly low, thereby impairing the kinetic performance of the negative active material.

In some embodiments, a temperature of the heat treatment in step S3 may be 500 °C to 1500 °C, and optionally 800 °C to 1200 °C; and/or a heating rate of the heat treatment may be 2 °C/min to 10 °C/min; and/or a temperature holding time of the heat treatment may be 0.5 to 48 hours. If the temperature of the heat treatment exceeds 1500 °C, a carbothermal reduction reaction (CRR) is prone to occur between the titanium-containing precursor and carbon precursor in the functional material precursor to generate TiC that lacks a function of deintercalating the active ions. This may result in a capacity loss of the negative active material and increase the degree of crystallization of the amorphous carbon, and in turn, impair the kinetic performance of the negative active material.

In some embodiments, the negative electrode plate prepared in this application further optionally includes a negative active material suitable for use in a negative electrode of a secondary battery. The negative active material may be one or more of a graphite material (such as artificial graphite and natural graphite), mesocarbon microbeads (MCMB for short), hard carbon, soft carbon, a silicon-based material, or a tin-based material.

In some embodiments, the binder may be one or more selected from polyacrylic acid (PAA), polyacrylic acid sodium (PAAS), polyacrylamide (PAM), polyvinyl alcohol (PVA), styrene-butadiene rubber (SBR), sodium alginate (SA), polymethyl acrylic acid (PMAA), sodium carboxymethyl cellulose (CMC-Na), or carboxymethyl chitosan (CMCS).

In some embodiments, the thickener may be sodium carboxymethyl cellulose (CMC-Na).

In some embodiments, the conductive agent for use in the negative electrode plate may be one or more selected from graphite, superconductive carbon, acetylene black, carbon black, Ketjen black, carbon dots, carbon nanotubes, graphene, and carbon nanofibers.

### [Positive electrode plate]

The positive electrode plate includes a positive current collector and a positive film layer disposed on at least one surface of the positive current collector and containing a positive active material. As an example, the positive current collector includes two surfaces opposite to each other in a thickness direction of the positive current collector. The positive film layer is disposed on either or both of the two opposite surfaces of the positive current collector.

The positive current collector may be made of a material of high electrical conductivity and high mechanical strength. In some embodiments, the positive current collector may be an aluminum foil.

The specific type of the positive active material is not particularly limited in this application, and may be a material known in the art for use in a positive electrode of a secondary battery, and may be selected by a person skilled in the art according to practical needs.

In some embodiments, the secondary battery according to this application may be a lithium-ion secondary battery. The positive active material may include a positive active material well known in the art for use in a battery. For example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. The type of the binder is not particularly limited, and may be selected by a person skilled in the art according to practical needs. As an example, the binder for use in the positive film layer may include one or more of polyvinylidene difluoride (PVDF) or polytetrafluoroethylene (PTFE).

In some embodiments, the positive film layer further optionally includes a conductive agent. The type of the conductive agent is not particularly limited, and may be selected by a person skilled in the art according to practical needs. As an example, the conductive agent for use in the positive film layer may include one or more of graphite, superconductive carbon, acetylene black, carbon black, Ketjen black, carbon dots, carbon nanotubes, graphene, or carbon nanofibers.

In some embodiments, the steps of preparing a positive electrode plate from a positive active material may include: dispersing a positive active material, a binder, and optionally a conductive agent into a solvent, where the solvent may be N-methyl-pyrrolidone, and stirring the mixture well in a vacuum mixer to obtain a positive slurry; coating a positive current collector aluminum foil with the positive slurry evenly, air-drying the slurry at a room temperature, and then moving the current collector into an oven for drying, and performing cold calendering and slitting to obtain a positive electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluoro(oxalato) borate), LiBOB (lithium bis(oxalato) borate), LiPO2F₂ (lithium difluorophosphate), LiDFOP (lithium difluoro(bisoxalato) phosphate), and LiTFOP (lithium tetrafluoro(oxalato) phosphate).

In some embodiments, the solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like.

### [Separator]

Secondary batteries that employ an electrolytic solution and some secondary batteries that employ a solid-state electrolyte further contain a separator. The separator is disposed between the positive electrode plate and the negative electrode plate to serve an isolation purpose. The type of the separator is not particularly limited in this application, and may be any well-known porous separator that is highly stable both chemically and mechanically. In some embodiments, the material of the separator may be one or more selected from glass fiber, non-woven fabric, polyethylene, polypropylene, or polyvinylidene difluoride. The separator may be a single-layer film or a multilayer composite film. When the separator is a multilayer composite film, materials in different layers may be identical or different.

### [Outer package]

In some embodiments, the secondary battery may include an outer package configured to package the positive electrode plate, the negative electrode plate, the separator, and the electrolyte. As an example, the positive electrode plate, the negative electrode plate, and the separator may be stacked or wound to form a stacked-type battery cell or a jelly-roll battery cell. The battery cell is packaged in the outer package. The electrolyte may be an electrolytic solution, and the electrolytic solution infiltrates in the battery cell. The number of battery cells in a secondary battery may be one or more, and may be adjusted as required.

In some embodiments, the outer package of the secondary battery may be a soft package such as a pouch-type soft package. The material of the soft package may be plastic such as one or more of polypropylene (PP), polybutylene terephthalate (PBT), or polybutylene succinate (PBS). The outer package of the secondary battery may also be a hard casing such as an aluminum casing.

In some embodiments, the positive electrode plate, the negative electrode plate, and the separator may be made into an electrode assembly by winding or stacking.

The shape of the secondary battery is not particularly limited in this application, and may be cylindrical, prismatic or any other shape. FIG. 2 shows a prismatic secondary battery 5 as an example.

The secondary battery according to this application may be assembled to form a battery module. The number of secondary batteries in a battery module may be plural, and may be adjusted according to practical applications and capacity of the battery module.

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a housing that provides an accommodation space. The plurality of secondary batteries 5 are accommodated in the accommodation space.

In this application, the battery module containing the secondary batteries may be assembled to form a battery pack. The number of the battery modules contained in a battery pack may be adjusted according to practical applications and the capacity of the battery pack.

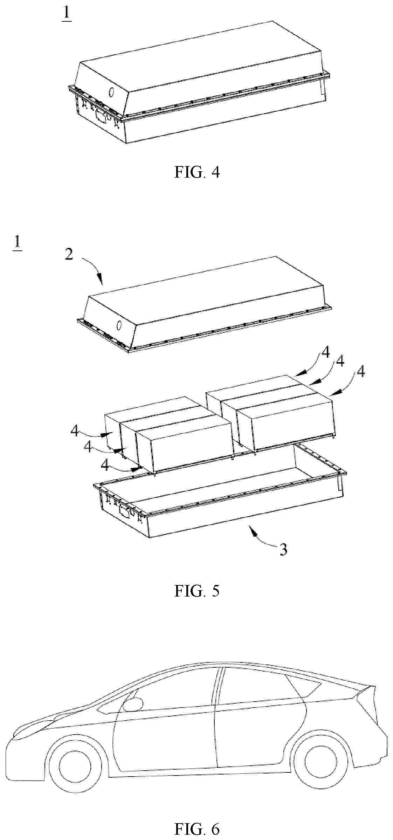

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### [Electrical device]

This application further provides an electrical device. The electrical device includes the secondary battery according to this application. The secondary battery is configured to provide a power supply for the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the electrical device may be a mobile phone, a tablet computer, a notebook computer, or the like. The electrical device is generally required to be thin and light, and may employ a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

The test methods of physical and chemical characteristic parameters of the negative active material prepared in the following embodiments and comparative embodiments are as follows:

Testing the porosity of the negative active material with reference to the standard GB/T *24586-2009 Iron Ores Determination of Apparent Density, True Density and Porosity.*

Testing the morphology of the titanium-containing compound with a cross-section polisher, performing morphological analysis of ion-beam polished cross-section with reference to the standard JY/T 010-1996 *General Rules for Analytical Scanning Electron Microscopy,* and performing elemental analysis of ion-beam polished cross-section with reference to the standard GB/T 17359-2012 *Microbeam Analysis-Quantitative Analysis Using Energy Dispersive Spectrometry.*

Determining the pore size distribution of the solid materials with reference to the standard GB/T 21650.2-2008 *Pore Size Distribution and Porosity of Solid Materials by Mercury Porosimetry and Gas Adsorption.* Measuring the volume of micropores by using CO₂ as an absorbate gas, and measuring the volume of macropores and mesopores by using N₂ as an absorbate gas. Calculating the percentage of the macropores, mesopores, and micropores in the negative active material separately based on the two volumes.

Determining the content of element S and/or N in the negative active material with reference to the standard GB/T 35582-2017 *Sulfur and Nitrogen Elemental Analyzers.*

Measuring the volume distribution particle diameters Dv₁₀, Dv₅₀, and Dv₉₀ of the negative active material with a Mastersizer 3000 laser particle size analyzer with reference to the standard GB/T 19077-2016 *Particle Size Analysis Laser Diffraction Method,* where Dv₁₀ is a particle diameter corresponding to a cumulative volume percent of 10%, Dv₅₀ is a particle diameter corresponding to a cumulative volume percent of 50%; and Dv₉₀ is a particle diameter corresponding to a cumulative volume percent of 90% in a volume-based particle size distribution of the material, all being measured with a laser particle size analyzer (such as Malvern MasterSizer 3000) with reference to the standard GB/T 19077.1-2016.

Measuring the specific surface area of the negative active material powder with reference to the standard GB/T 19587-2004 *Determination of the Specific Surface Area of Solids by Gas Adsorption Using the BET Method.*

Measuring the tapped density of the negative active material powder with a powder tap density tester (such as Dandong Bettersizer BT-301) with reference to the standard GB/T 5162-2006.

### Embodiment 1

1) Pore-forming treatment: Mixing the natural graphite raw pellets with the anhydrous CaCl₂ salt at a mass ratio of 1: 1, putting the mixture into a graphite crucible. Passing N₂ into the crucible as a protective gas. Heating up to 1000 °C at a rate of 5 °C/min, and holding the temperature for 2 hours, and then cooling down to a room temperature. Taking out the mixture and washing the mixture with deionized water until the pH value is 7. Vacuum-drying the mixture at 120 °C for 8 hours to obtain dry powder, that is, a porous natural graphite precursor.
2) Mixing the plastic phenolic resin, an ethanol solvent, and a curing agent dicumyl peroxide at a ratio of 1: 5: 0.2 to obtain a resin solution, and then adding n-butyl titanate at a mass percent equal to the mass percent of the plastic phenolic resin. Stirring the mixture at a room temperature for 30 minutes to obtain a homogeneous solution, that is, a functional material precursor.
3) Adding the porous natural graphite precursor obtained in step 1) and the functional material precursor obtained in step 2) into a VC mixer successively at a mass ratio of 3: 7, stirring the mixture for 30 minutes, and then moving the mixture into a mechanofusion machine. Stirring for 10 minutes at a rotation speed of 600 rpm to ensure that the functional material precursor sufficiently infiltrate into the porous natural graphite precursor. Subsequently, moving the mixture of the porous natural graphite precursor and the functional material precursor into a graphite crucible. Passing nitrogen into the crucible as a protective gas. Heating up to 500 °C at a rate of 5 °C/min. Holding the temperature for 2 hours, and then cooling down to a room temperature to obtain a negative active material. The negative active material includes a natural graphite substrate of a porous structure and a functional material distributed in pores of the natural graphite substrate. The functional material includes amorphous carbon and a titanium-containing compound (in this embodiment, primarily titanium dioxide).

### [Assembling a secondary battery]

Mixing LiNi_{0.8}Mn_{0.1}Co_{0.1}O₂ as a positive active material, conductive carbon black, and PVDF at a mass ratio of 96: 2.5: 1.5, adding an appropriate amount of N-methyl-pyrrolidone, and stirring well to obtain a positive slurry. Coating an aluminum foil with the positive slurry, and drying the slurry to obtain a positive electrode plate. The coating concentration of the positive active material on the positive electrode plate is 0.02 g/cm².

Mixing the negative active material prepared in an embodiment, conductive carbon black, and sodium carboxymethyl cellulose at a mass ratio of 96: 1: 3, adding an appropriate amount of deionized water, and stirring well to obtain a negative slurry. Coating a copper foil with the negative slurry, and drying the slurry to obtain a negative electrode plate. The coating concentration of the negative active material on the negative electrode plate is 0.012 g/cm².

Mixing ethylene carbonate (EC), ethyl methyl carbonate (EMC), and diethyl carbonate (DEC) at a volume ratio of 1: 1: 1, and dissolving LiPF₆ in the forgoing solution homogeneously to obtain an electrolytic solution. In the electrolytic solution, the concentration of the LiPF₆ is 1 mol/L.

Using a 12 µm-thick polypropylene thin-film as a separator. Laying the prepared positive electrode plate, separator, and negative electrode plate in sequence, leaving the separator to be located between the positive electrode plate and the negative electrode plate to serve a function of separation. Winding the laid structure, and putting the structure into an aluminum-plastic film package. Injecting an electrolytic solution. Sealing the package, and performing chemical formation and capacity grading to obtain a secondary battery.

### [Testing battery performance]

### 1. Testing a reversible gram capacity of the negative active material

Die-cutting the negative electrode plate prepared in each embodiment and comparative embodiment to obtain small discs, each disc serving as a working electrode. Assembling components in a CR2032 button cell to obtain a half-cell, where the components are: a lithium sheet used as a counter electrode, a 12 µm-thick polypropylene thin-film used as a separator, and an electrolytic solution prepared by dissolving a LiPF₆ solute in a solvent formed by mixing ethylene carbonate (EC), ethyl methyl carbonate (EMC), and diethyl carbonate (DEC) at a ratio of 1: 1: 1. Leaving the half-cell to stand for 6 hours in a 25 °C environment, and then performing the following discharging steps separately: discharging the half-cell at a constant current rate of 0.05 C (1 C is a current at which the cell can be fully charged in 1 hour under theoretical conditions) until the voltage reaches 5.0 mV, discharging the half-cell at a constant current of 50 µA until the voltage reaches 5.0 mV, and discharging the half-cell at a constant current of 10 µA until the voltage reaches 5.0 mV. Leaving the cell to stand for 10 minutes, and then charging the cell at a constant current rate of 0.1 C until the voltage reaches 2.0 V. Recording the constant-current charge capacity as the reversible gram capacity of the negative active material.

### 2. Testing the fast-charging performance of the secondary battery

Charging the secondary battery prepared in each embodiment and comparative embodiment at a constant current of 0.33 C under a 25 °C room temperature until the voltage reaches 4.25 V, and then charging the battery at a constant voltage until the current reaches 0.05 C. Leaving the battery to stand for 5 minutes, and then discharging the battery at a constant current of 0.33 C until the voltage reaches 2.5 V. Recording the constant-current discharge capacity as an initial capacity C₀. Subsequently, charging the battery at a constant current of 0.5 C₀, 1 C₀, 1.5 C₀, 2 C₀, 2.5 C₀, 3 C₀, and 3.5 C₀ separately until the voltage reaches a 4.25 V full-battery potential or a 0 mV negative electrode cut-off potential (whichever is reached first). Discharging, after completion of charging at each of the above current rates, the battery at a current of 0.33 C₀ until the voltage reaches 2.5 V. Recording negative electrode potentials under different charge rates separately at intervals of 10% SOC (State of Charge), plotting a curve of the rate in relation to the negative electrode potential under different SOC values, and fitting the curve linearly to obtain a charge rate corresponding to the negative electrode potential 0 mV under each different SOC value, denoted as Cₓ (x = 2 to 8). Calculating a charging time spent in charging the secondary battery from 10% SOC to 80% SOC, where the calculation formula is: charging time T (min) = (1/C₂ + 1/C₃ + 1/C₄ +1/C₅ + 1/C₆ + 1/C₇ + 1/C₈) × 0.1 × 60. The shorter the charging time, the higher the fast-charging performance of the battery.

### 3. Testing the cycle performance of the secondary battery

Charging the secondary battery prepared in each embodiment and comparative embodiment at a constant current of 0.33 C under a 25 °C room temperature until the voltage reaches 4.25 V, and then charging the battery at a constant voltage until the current reaches 0.05 C. Leaving the battery to stand for 5 minutes, and then discharging the battery at a constant current of 0.33 C until the voltage reaches 2.5 V. Recording the constant-current discharge capacity as an initial capacity C₀. Subsequently, repeating cycles in which the battery is charged at a constant current of 2 C₀ and then discharged at a constant current of 0.33 C₀ until the cycle capacity retention rate (Cₙ/C₀×100%) reaches 80%. Recording the number of cycles at this time. The larger the number of cycles, the higher the cycle performance of the battery.

### Embodiments 2 to 30

Embodiments 2 to 30 are based on Embodiment 1, but differ from Embodiment 1 in that:
In Embodiment 2, the mass ratio between the natural graphite raw pellets and the pore-forming agent anhydrous CaCl₂ salt in step 1) is 1: 20.

In Embodiment 3, the mass ratio between the natural graphite raw pellets and the pore-forming agent anhydrous CaCl₂ salt in step 1) is 1: 50.

In Embodiment 4, the mass ratio between the natural graphite raw pellets and the pore-forming agent anhydrous CaCl₂ salt in step 1) is 1: 100.

In Embodiment 5, the temperature holding time in the pore-forming treatment in step 1) is 0.5 hour (that is, the temperature is raised to 1000 °C at a rate of 5 °C/min, and then held for 0.5 hour, and then lowered to the room temperature).

In Embodiment 6, the temperature holding time in the pore-forming treatment in step 1) is 48 hours (that is, the temperature is raised to 1000 °C at a rate of 5 °C/min, and then held for 48 hours, and then lowered to the room temperature).

In Embodiment 7, the heating rate in the pore-forming treatment in step 1) is 2 °C/min (that is, the temperature is raised to 1000 °C at a rate of 2 °C/min, and then held for 2 hours, and then lowered to the room temperature).

In Embodiment 8, the carbon precursor in step 2) is tar.

In Embodiment 9, the carbon precursor in step 2) is pitch.

In Embodiment 10, the carbon precursor in step 2) is modified pitch.

In Embodiment 11, the carbon precursor in step 2) is natural fibers.

In Embodiment 12, the carbon precursor in step 2) is a mixture of plastic phenolic resin and tar mixed at a mass ratio of 1: 1.

In Embodiment 13, the carbon precursor in step 2) is carbon powder.

In Embodiment 14, the titanium-containing precursor in step 2) is tetraethyl titanate.

In Embodiment 15, the titanium-containing precursor in step 2) is orthotitanic acid.

In Embodiment 16, the titanium-containing precursor in step 2) is metatitanic acid.

In Embodiment 17, the titanium-containing precursor in step 2) is water-soluble TiO₂ gel.

In Embodiment 18, the titanium-containing precursor in step 2) is n-butyl titanate (containing lithium acetate).

In Embodiment 19, the titanium-containing precursor in step 2) is titanium dioxide powder.

In Embodiment 20, the mass ratio between the carbon precursor and the titanium-containing precursor in step 2) is 1: 8.

In Embodiment 21, the mass ratio between the carbon precursor and the titanium-containing precursor in step 2) is 160: 1.

In Embodiment 22, the mass ratio between the porous natural graphite precursor and the functional material precursor in step 3) is 4: 1.

In Embodiment 23, the mass ratio between the porous natural graphite precursor and the functional material precursor in step 3) is 7: 1.

In Embodiment 24, the mass ratio between the porous natural graphite precursor and the functional material precursor in step 3) is 10: 1.

In Embodiment 25, the heating rate in the heat treatment in step 3) is 2 °C/min.

In Embodiment 26, the heating rate in the heat treatment in step 3) is 10 °C/min.

In Embodiment 27, the heat treatment temperature in step 3) is 1500 °C.

In Embodiment 28, the heat treatment temperature in step 3) is 1200 °C.

In Embodiment 29, the temperature holding time in the heat treatment in step 3) is 0.5 hour.

In Embodiment 30, the temperature holding time in the heat treatment in step 3) is 48 hours.

### Comparative Embodiments 1 to 4

Comparative Embodiment 1 differs from Embodiment 1 in that: In step 2), during preparation of the functional material precursor, just a resin solution is used, but without using the n-butyl titanate, where the resin solution is prepared by mixing the plastic phenolic resin, the ethanol solvent, and the curing agent dicumyl peroxide at a ratio of 1: 5: 0.2. Therefore, the functional material in the finally prepared negative active material includes only amorphous carbon.

Comparative Embodiment 2 differs from Embodiment 1 in that: In step 2), during preparation of the functional material precursor, just the n-butyl titanate is used, but without using the resin solution prepared by mixing the plastic phenolic resin, the ethanol solvent, and the curing agent dicumyl peroxide at a ratio of 1: 5: 0.2. Therefore, the functional material in the finally prepared negative active material includes only a titanium-containing compound (in this comparative embodiment, a titanium oxide that assumes a spherical or spheroidal morphology).

Comparative Embodiment 3 differs from Embodiment 1 in that: The porous natural graphite substrate obtained in step 1) is used as a negative active material.

Comparative Embodiment 4 differs from Embodiment 1 in that: The heat treatment temperature in step 3) is 2000 °C.

The secondary battery is assembled according to Embodiment 1 by using the negative active material prepared in Embodiments 2 to 30 and Comparative Embodiments 1 to 4.

The physical and chemical characteristic parameters of the negative active materials prepared in Embodiments 1 to 30 and Comparative Embodiments 1 to 4 are measured, and the performance indicators (reversible gram capacity, fast-charging performance, and cycle performance) of the secondary battery assembled by using the negative active material prepared in Embodiments 1 to 30 and Comparative Embodiments 1 to 4 are measured. The test results are shown in Table 1 and Table 2 below.

**Table 1 Physical and chemical characteristic parameters of negative active materials prepared in Embodiments 1 to 30 and Comparative Embodiments 1 to 4**

| Serial number | Negative active material | | | | | | | | |
|---|---|---|---|---|---|---|---|---|---|
| | Functional materials | | | | Percentage of mesopores (vol%) | Percentage of micropores (vol%) | Percentage of macropores (vol%) | Porosity (%) | Reversible gram capacity (mAh/g) |
| | Type | Morphology of titanium-containing compound | Mass percent of functional material in negative active material | Mass ratio between amorphous carbon and titanium-containing compound | | | | | |
| Embodiment 1 | Amorphous carbon and titanium dioxide | Spherical and spheroidal | 10% | 6: 1 | 63% | 19% | 18% | 70% | 360 |
| Embodiment 2 | Amorphous carbon and titanium dioxide | Spherical and spheroidal | 10% | 6: 1 | 80% | 10% | 10% | 90% | 366 |
| Embodiment 3 | Amorphous carbon and titanium dioxide | Spherical and spheroidal | 10% | 6: 1 | 75% | 5% | 20% | 87% | 362 |
| Embodiment 4 | Amorphous carbon and titanium dioxide | Spherical and spheroidal | 10% | 6: 1 | 60% | 4% | 36% | 98% | 360 |
| Embodiment 5 | Amorphous carbon, titanium dioxide, and titanium monoxide | Spherical and spheroidal | 10% | 6: 1 | 79% | 1% | 20% | 71% | 364 |
| Embodiment 6 | Amorphous carbon and titanium dioxide | Spherical and spheroidal | 10% | 6: 1 | 80% | 19% | 1% | 85% | 371 |
| Embodiment 7 | Amorphous carbon and titanium dioxide | Spherical and spheroidal | 10% | 6: 1 | 90% | 6% | 4% | 90% | 370 |
| Embodiment 8 | Amorphous carbon and titanium dioxide | Spherical and spheroidal | 10% | 6: 1 | 81% | 8% | 11% | 80% | 368 |
| Embodiment 9 | Amorphous carbon and titanium dioxide | Spherical and spheroidal | 10% | 6: 1 | 82% | 5% | 13% | 75% | 364 |
| Embodiment 10 | Amorphous carbon and titanium dioxide | Spherical and spheroidal | 10% | 6: 1 | 79% | 7% | 14% | 72% | 366 |
| Embodiment 11 | Amorphous carbon and titanium dioxide | Spherical and spheroidal | 10% | 6: 1 | 66% | 19% | 15% | 70% | 360 |
| Embodiment 12 | Amorphous carbon and titanium dioxide | Spherical and spheroidal | 10% | 6: 1 | 82% | 9% | 9% | 87% | 365 |
| Embodiment 13 | Amorphous carbon and titanium dioxide | Spherical and spheroidal agglomerates | 10% | 6: 1 | 62% | 19% | 19% | 70% | 362 |
| Embodiment 14 | Amorphous carbon and titanium dioxide | Spherical and spheroidal | 9% | 7: 1 | 81% | 7% | 12% | 89% | 368 |
| Embodiment 15 | Amorphous carbon and titanium dioxide | Spherical and spheroidal | 10% | 6: 1 | 89% | 6% | 5% | 87% | 364 |
| Embodiment 16 | Amorphous carbon and titanium dioxide | Spherical and spheroidal | 10% | 6: 1 | 92% | 5% | 3% | 85% | 363 |
| Embodiment 17 | Amorphous carbon and titanium dioxide | Spherical and spheroidal | 10% | 5: 1 | 94% | 5% | 1% | 80% | 362 |
| Embodiment 18 | Amorphous carbon and lithium titanate | Spherical and spheroidal | 8% | 8: 1 | 75% | 10% | 15% | 90% | 368 |
| Embodiment 19 | Amorphous carbon and titanium dioxide | Spherical and spheroidal agglomerates | 10% | 6: 1 | 63% | 17% | 20% | 70% | 360 |
| Embodiment 20 | Amorphous carbon and titanium dioxide | Spherical and spheroidal | 10% | 1: 1 | 85% | 1% | 14% | 70% | 368 |
| Embodiment 21 | Amorphous carbon and titanium dioxide | Spherical and spheroidal | 10% | 9: 1 | 81% | 10% | 9% | 89% | 362 |
| Embodiment 22 | Amorphous carbon and titanium dioxide | Spherical and spheroidal | 5% | 6: 1 | 95% | 2% | 3% | 90% | 370 |
| Embodiment 23 | Amorphous carbon and titanium dioxide | Spherical and spheroidal | 2% | 6: 1 | 90% | 5% | 5% | 89% | 368 |
| Embodiment 24 | Amorphous carbon and titanium dioxide | Spherical and spheroidal | 1% | 6: 1 | 70% | 5% | 25% | 73% | 360 |
| Embodiment 25 | Amorphous carbon and titanium dioxide | Spherical and spheroidal | 10% | 6: 1 | 98% | 1% | 1% | 85% | 372 |
| Embodiment 26 | Amorphous carbon and titanium dioxide | Spherical and spheroidal | 10% | 6: 1 | 85% | 5% | 10% | 75% | 365 |
| Embodiment 27 | Amorphous carbon and titanium monoxide | Octahedron | 10% | 6: 1 | 91% | 7% | 2% | 80% | 374 |
| Embodiment 28 | Amorphous carbon and titanium monoxide | Spherical and spheroidal | 10% | 6: 1 | 93% | 2% | 5% | 82% | 373 |
| Embodiment 29 | Amorphous carbon and titanium dioxide | Spherical and spheroidal | 10% | 6: 1 | 85% | 5% | 10% | 75% | 372 |
| Embodiment 30 | Amorphous carbon and titanium dioxide | Nanorods | 10% | 6: 1 | 78% | 7% | 15% | 70% | 374 |
| Comparative Embodiment 1 | Amorphous carbon | - | 10% | - | 66% | 27% | 7% | 59% | 347 |
| Comparative Embodiment 2 | Titanium dioxide | Spherical and spheroidal | 10% | - | 6% | 23% | 71% | 37% | 342 |
| Comparative Embodiment 3 | - | - | 10% | - | 55% | 9% | 36% | 54% | 352 |
| Comparative Embodiment 4 | Crystalline carbon and titanium carbide | Octahedron | 10% | 6: 1 | 69% | 5% | 26% | 65% | 330 |

**Table 2 Performance of secondary batteries prepared in Embodiments 1 to 30 and Comparative Embodiments 1 to 4**

| Serial number | Fast-charging performance (min) | Cycle performance (number of cycles) |
|---|---|---|
| Embodiment 1 | 15.3 | 1100 |
| Embodiment 2 | 11.5 | 1734 |
| Embodiment 3 | 11.0 | 1569 |
| Embodiment 4 | 28.0 | 1050 |
| Embodiment 5 | 10.8 | 1460 |
| Embodiment 6 | 15.0 | 1960 |
| Embodiment 7 | 12.0 | 1834 |
| Embodiment 8 | 13.0 | 1890 |
| Embodiment 9 | 12.0 | 1679 |
| Embodiment 10 | 12.5 | 1650 |
| Embodiment 11 | 11.5 | 1300 |
| Embodiment 12 | 11.7 | 1569 |
| Embodiment 13 | 20.3 | 1215 |
| Embodiment 14 | 11.7 | 1569 |
| Embodiment 15 | 11.0 | 1542 |
| Embodiment 16 | 12.0 | 1440 |
| Embodiment 17 | 12.5 | 1350 |
| Embodiment 18 | 10.5 | 1691 |
| Embodiment 19 | 25.3 | 1050 |
| Embodiment 20 | 12.5 | 1693 |
| Embodiment 21 | 9.8 | 1569 |
| Embodiment 22 | 9.3 | 1894 |
| Embodiment 23 | 9.2 | 1763 |
| Embodiment 24 | 21.7 | 1245 |
| Embodiment 25 | 10.0 | 2250 |
| Embodiment 26 | 9.0 | 1630 |
| Embodiment 27 | 11.0 | 2473 |
| Embodiment 28 | 10.5 | 2265 |
| Embodiment 29 | 9.8 | 2014 |
| Embodiment 30 | 11.3 | 2536 |
| Comparative Embodiment 1 | 43.4 | 670 |
| Comparative Embodiment 2 | 53.9 | 734 |
| Comparative Embodiment 3 | 48.5 | 950 |
| Comparative Embodiment 4 | 33.2 | 1040 |

As can be seen from the results set out in Table 1 and Table 2 above, in contrast to the negative active materials prepared in Comparative Embodiments 1 to 3 (the natural graphite substrate of a porous structure in such negative active materials contains the amorphous carbon alone, or the titanium-containing compound alone, or neither thereof), and, in contrast to the negative active material prepared in Comparative Embodiment 4 (the natural graphite substrate of a porous structure in such negative active materials contains crystalline carbon and titanium carbide), Embodiments 1 to 30 have achieved negative active materials that can maintain a good pore structure under a condition of a high compacted density (the natural graphite substrate of a porous structure in such negative active materials contains a functional material formed of both the amorphous carbon and the titanium-containing compound). Therefore, the negative active materials can provide active ion transport channels and increase active ion deintercalation sites. The reversible gram capacity of all the resultant negative active materials is at least 360 mAh/g, and preferably at least 362 mAh/g. In addition, the secondary batteries made of the negative active materials prepared in Embodiments 1 to 30 are notably excellent in both the fast-charging performance and the cycle performance. The charging time spent in charging the secondary batteries from 10% SOC to 80% SOC is at most 28 min, and preferably at most 20 min. The number of cycles of all the secondary batteries is at least 1050, and preferably at least 1100.

### Embodiments 31 to 33

### Embodiments 31 to 33 are operated according to Embodiment 1 except:

The pore-forming agent used to prepare the porous natural graphite precursor in Embodiment 31 is LiNO₃, and the pore-forming treatment temperature is 300 °C (that is, the temperature is raised to 300 °C at a rate of 5 °C/min).

The pore-forming agent used to prepare the porous natural graphite precursor in Embodiment 32 is (NH₄)₂S₂O₃, and the pore-forming treatment temperature is 300 °C.

The pore-forming agent used to prepare the porous natural graphite precursor in Embodiment 33 is a mixture of LiNO₃ and (NH₄)₂S₂O₃ mixed at a mass ratio of 1: 1, and the pore-forming treatment temperature is 300 °C.

The secondary battery is assembled according to Embodiment 1 by using the negative active material prepared in Embodiments 31 to 33.

The physical and chemical characteristic parameters of the negative active materials prepared in Embodiments 31 to 33 are measured, and the performance indicators (reversible gram capacity, fast-charging performance, and cycle performance) of the secondary battery assembled by using the negative active material prepared in Embodiments 31 to 33 are measured. The test results are shown in Table 3 and Table 4 below.

**Table 3 Physical and chemical characteristic parameters of the negative active materials prepared in Embodiments 31 to 33**

| Serial number | Negative active material | | | | | | | | | |
|---|---|---|---|---|---|---|---|---|---|---|
| | Functional material | | | | Content of element N and/or S (wt%) | Percentage of mesopores (vol%) | Percentage of micropores (vol%) | Percentage of macropores (vol%) | Porosity (%) | Reversible gram capacity (mAh/g) |
| | Type | Morphology of titanium-containing compound | Mass percent of functional material in negative active material | Mass ratio between amorphous carbon and titanium-containing compound | | | | | | |
| Embodiment 31 | Amorphous carbon and titanium dioxide | Spherical and spheroidal | 10% | 6: 1 | Element N: 1.0% | 70% | 20% | 10% | 82% | 362 |
| Embodiment 32 | Amorphous carbon and titanium dioxide | Spherical and spheroidal | 10% | 6: 1 | Element N: 0.5%; and element S: 0.5% | 76% | 10% | 14% | 78% | 364 |
| Embodiment 33 | Amorphous carbon and titanium dioxide | Spherical and spheroidal | 10% | 6: 1 | Element N: 1.0%; and element S: 0.5% | 77% | 11% | 12% | 76% | 368 |

**Table 4 Test results of performance of secondary batteries assembled in Embodiments 31 to 33**

| Serial number | Fast-charging performance (min) | Cycle performance (number of cycles) |
|---|---|---|
| Embodiment 31 | 10.0 | 2352 |
| Embodiment 32 | 8.6 | 2376 |
| Embodiment 33 | 8.1 | 2480 |

As can be seen from the results of Embodiments 31 to 33, when the prepared negative active material contains a small amount of element N and/or element S, the fast-charging performance of the secondary battery made of the negative active material is further improved, and the cycle performance of the secondary battery can also be improved. The maximum charging time spent in charging the secondary battery from 10% SOC to 80% SOC is 10 minutes, and the minimum number of cycles of the secondary battery is 2000.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A negative active material, comprising a natural graphite substrate of a porous structure and a functional material distributed in pores of the natural graphite substrate, wherein the functional material comprises amorphous carbon and a titanium-containing compound.

2. The negative active material according to claim 1, wherein the titanium-containing compound comprises one or more of a titanium-containing oxide or a titanate salt;
optionally, a chemical formula of the titanium-containing oxide is expressed as TiOₓ, wherein 0 < x ≤ 2; and
optionally, the titanate salt comprises one or more of lithium titanate or lithium metatitanate.

3. The negative active material according to claim 1 or 2, wherein a morphology of the titanium-containing compound is one or more of a sphere, a spheroid, a polyhedron, or a nanorod.

4. The negative active material according to any one of claims 1 to 3, wherein a mass percent of the functional material in the negative active material is less than or equal to 10%, and optionally 2% to 5%.

5. The negative active material according to any one of claims 1 to 4, wherein a mass ratio between the amorphous carbon and the titanium-containing compound is (1 to 9): 1, and optionally (2 to 6): 1.

6. The negative active material according to any one of claims 1 to 5, wherein the porous structure of the natural graphite substrate comprises mesopores, and a volume percent of the mesopores is greater than or equal to 60%, and optionally, the volume percent of the mesopores is greater than or equal to 70%.

7. The negative active material according to any one of claims 1 to 6, wherein
the porous structure of the natural graphite substrate comprises micropores, and optionally, a volume percent of the micropores is less than or equal to 20%; and/or
the porous structure of the natural graphite substrate comprises macropores, and optionally, a volume percent of the macropores is less than or equal to 20%.

8. The negative active material according to any one of claims 1 to 7, wherein a porosity of the negative active material is greater than or equal to 70%, and optionally, the porosity of the negative active material is 70% to 90%.

9. The negative active material according to any one of claims 1 to 8, wherein the negative active material further comprises at least one of element N or element S; and
optionally, a content of the element N and/or the element S is less than or equal to 5%.

10. The negative active material according to any one of claims 1 to 9, wherein Dv₅₀ of the negative active material is 5 µm to 30 µm, and optionally 17 µm to 25 µm; and/or
a span (Dv₉₀ - Dv₁₀)/Dv₅₀ of the negative active material is 0.5 to 2.0, and optionally 0.8 to 1.53; and/or
a specific surface area of the negative active material is 2.0 m²/g to 20 m²/g, and optionally 3 m²/g to 10 m²/g; and/or
a tapped density of the negative active material is 0.6 g/cm³ to 1.3 g/cm³, and optionally 0.8 g/cm³ to 0.9 g/cm³.

11. The negative active material according to any one of claims 1 to 10, wherein a gram capacity of the negative active material is greater than or equal to 360 mAh/g, and optionally, the gram capacity of the negative active material is greater than or equal to 362 mAh/g.

12. A method for preparing the negative active material according to any one of claims 1 to 11, wherein the method comprises the following steps:
S1: performing, by using a pore-forming agent, pore-forming treatment on natural graphite raw pellets to obtain a porous natural graphite precursor;
S2: mixing a carbon precursor with a titanium-containing precursor to obtain a functional material precursor; and
S3: mixing the porous natural graphite precursor obtained in step S1 with the functional material precursor obtained in step S2 to obtain a mixture, and heat-treating the mixture under an inert atmosphere to obtain the negative active material, wherein
the negative active material comprises a natural graphite substrate of a porous structure and a functional material distributed in pores of the natural graphite substrate, and the functional material comprises amorphous carbon and a titanium-containing compound.

13. The preparation method according to claim 12, wherein the pore-forming agent in step S1 is selected from salt pore-forming agents, and optionally, the salt pore-forming agents are one or more selected from LiNO₃, (NH₄)₂S₂O₃, or anhydrous CaCl₂.

14. The preparation method according to claim 12 or 13, wherein a mass ratio between the natural graphite raw pellets and the pore-forming agent in step S1 is 1: (1 to 50), and optionally 1: (5 to 20).

15. The preparation method according to any one of claims 12 to 14, wherein a temperature of the pore-forming treatment in step S1 is less than or equal to 1100 °C, and optionally less than or equal to 500 °C; and/or
a heating rate of the pore-forming treatment is 2 °C/min to 5 °C/min; and/or
a temperature holding time of the pore-forming treatment is 0.5 to 48 hours.

16. The preparation method according to any one of claims 12 to 15, wherein a mass ratio between the carbon precursor and the titanium-containing precursor in step S2 is (1 to 160): (1 to 8), and optionally (1 to 120): (1 to 4);
optionally, the carbon precursor is one or more selected from tar, pitch, modified pitch, resin, or natural cellulose; and
optionally, the titanium-containing precursor is one or more selected from liquid-state alkyl titanate (containing lithium acetate or not), titanic acid, metatitanic acid, or water-soluble titanium oxide gel; and preferably, the liquid-state alkyl titanate is one or more selected from n-butyl titanate or tetraethyl titanate.

17. The preparation method according to any one of claims 12 to 16, wherein a mass ratio between the porous natural graphite precursor and the functional material precursor in step S3 is (3 to 9): (1 to 7), and optionally (4 to 7): (1 to 7).

18. The preparation method according to any one of claims 12 to 17, wherein a temperature of the heat treatment in step S3 is 500 °C to 1500 °C, and optionally 800 °C to 1200 °C; and/or
a heating rate of the heat treatment is 2 °C/min to 10 °C/min; and/or
a temperature holding time of the heat treatment is 0.5 to 48 hours.

19. A secondary battery, comprising the negative active material according to any one of claims 1 to 11 or a negative active material prepared by the method according to any one of claims 12 to 18.

20. An electrical device, comprising the secondary battery according to claim 19.
